# FASCICULE DE BREVET EUROPEEN

(11) **EP 0 858 148 B1**
(45) Date de publication et mention de la délivrance du brevet: **20.04.2005**
(21) Numéro de dépôt: 98400248.5
(22) Date de dépôt: 05.02.1998
(51) Int. Cl.: H02K 17/22, H02K 5/14, H01R 39/42

(54) **Agencement de mise hors-circuit des moyens de démarrage par rhéostat pour moteur asynchrone à bagues et moteur équipé d'un tel agencement**
Anordnung zur Abschaltung der Rheostat Andrehvorrichtung einer Schleifring-Asynchronmaschine, und Motor mit dieser Anordnung
Arrangement for disconnection of the rheostat starting means of a slip-ring asynchronous motor, and motor provided with such an arrangement

(30) Priorité: 06.02.1997 FR 9701344
(43) Date de publication de la demande: 12.08.1998
(73) Titulaire: GEC ALSTHOM MOTEURS SA, 54062 Nancy Cédex (FR)
(72) Inventeur: Leboucher, Alain, 54210 Saint Nicolas De Port (FR); Mater, Yvon, 54110 Nancy (FR); Verdot, Patrick, 54000 Nancy (FR)
(74) Mandataire: de Lambilly Delorme, Marie Pierre

(56) Documents cités:
- WO-A-91/15050
- DE-A- 2 510 431
- GB-A- 109 087

## Description

L'invention a pour objet un agencement de mise hors circuit des moyens de démarrage par rhéostat d'un moteur asynchrone à bagues, elle concerne aussi les moteurs équipés de tels agencements.

Comme il est connu, dans les moteurs asynchrones à bagues, tels qu'ici envisagés, au démarrage le bobinage rotorique d'un moteur est temporairement relié à un rhéostat de démarrage, par l'intermédiaire de bagues collectrices portées par son rotor et de balais d'alimentation qui sont solidaires des éléments fixes du moteur et qui viennent se presser contre les bagues collectrices pour assurer une continuité électrique entre balais et bagues. Après démarrage les bagues collectrices sont court-circuitées par un dispositif approprié et les balais sont écartés des bagues collectrices par un dispositif de relevage. Le relevage supprime la continuité électrique entre rhéostat et rotor et élimine les frottements inutiles et l'usure correspondante des balais et/ou bagues collectrices.

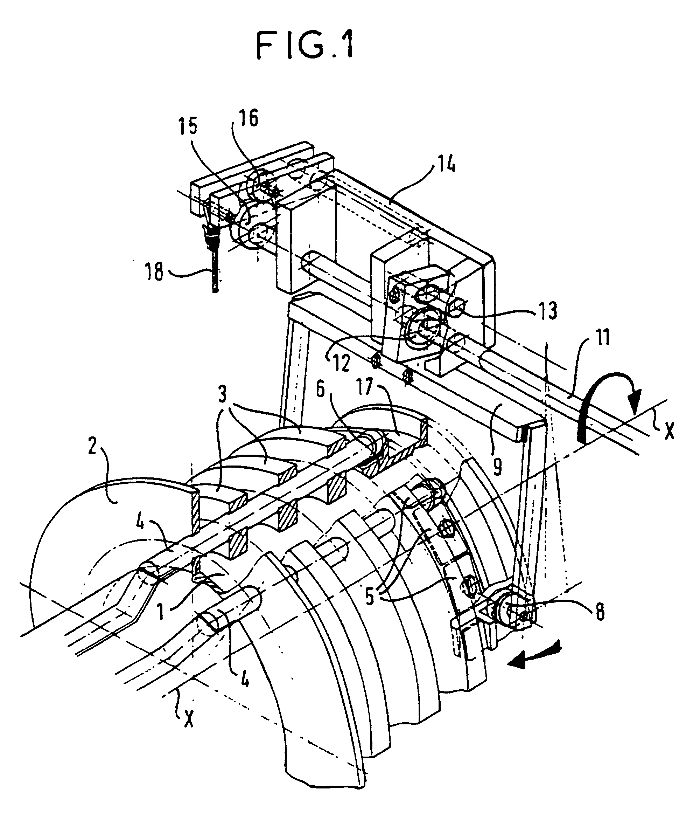

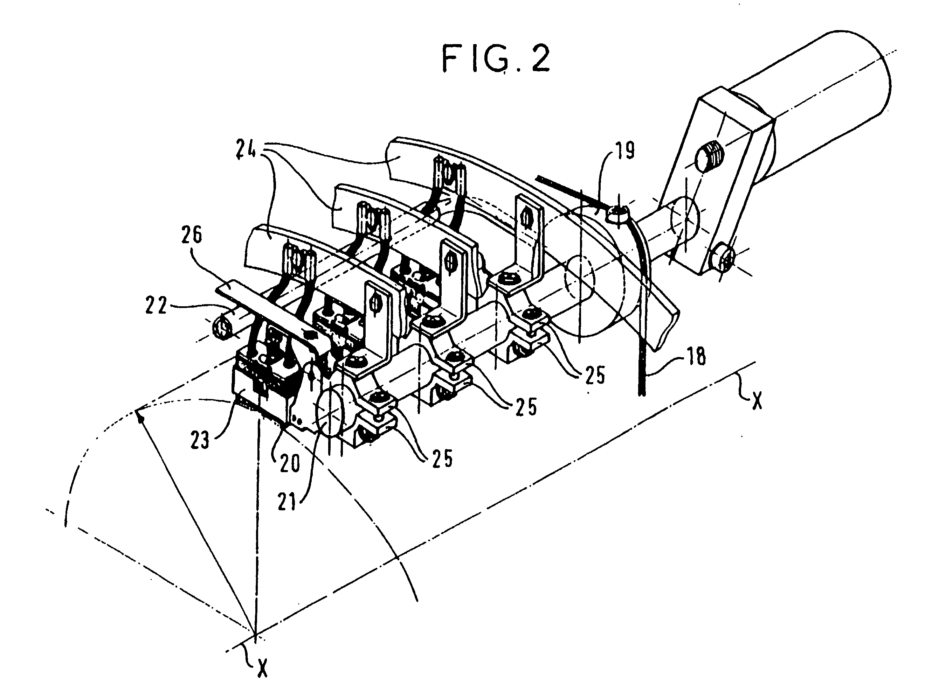

Un arrangement connu dont les éléments essentiels sont présentés sur les figures 1 et 2 combine un dispositif pour court-circuiter les bagues collectrices et un dispositif pour relever les balais d'un moteur qui agissent successivement, lorsque le démarrage du moteur qui le comporte est réalisé.

La figure 1 montre ainsi un rotor pour moteur asynchrone triphasé comportant un élément tubulaire 1 électriquement isolé portant une couronne 2 à une extrémité, trois bagues conductrices 3 de mise en liaison du bobinage du rotor, ce bobinage n'étant pas représenté, et des barres conductrices 4 longitudinales électriquement reliées, par exemple par soudure, chacune à une bague différente.

Les barres 4 sont situées à même distance de l'axe longitudinal XX du rotor. Elles traversent la couronne par une de leurs deux extrémités pour atteindre des bornes de raccordement, non représentées des phases du bobinage. Elles saillent par leur autre extrémité au delà des bagues collectrices, de manière à pouvoir être mise en court-circuit par un sous-ensemble mobile comportant notamment une couronne conductrice. La couronne conductrice est ici supposée dotée de plaquettes conductrices 5, par exemple en cuivre, disposées de manière à venir frotter tangentiellement contre les barres à proximité de l'extrémité de ces dernières. Les plaquettes 5 sont portées par une douille métallique 6 centrée sur l'axe XX d'un arbre central, non représenté, du rotor par rapport auquel elle est susceptible de se déplacer longitudinalement entre une première position pour laquelle les plaquettes sont en contact avec les barres et une seconde position où les plaquettes sont éloignées des barres par le déplacement longitudinal de la douille vers l'extérieur du rotor.

La douille 6 comporte une gorge périphérique 7 destinée à servir de chemin de roulement à deux galets fous 8 qui sont diamétralement situés dans cette gorge, préférablement en forme de U, et qui sont portés par deux bras parallèles d'une fourche de commande pendulaire 9. Les galets sont susceptibles de s'appuyer périphériquement sur l'une ou l'autre des rives de la gorge 7, de manière à déplacer la douille selon l'axe du rotor soit en direction des bagues collectrices, soit dans la direction opposée, suivant l'action exercée sur la fourche 9, par un organe de commande, non représenté, tel par exemple un servomoteur, solidaire des éléments fixes du moteur.

La course de la douille 6 est par exemple orientée par l'action d'une clavette longitudinalement disposée entre l'arbre du rotor d'axe XX, non représenté ici, et l'alésage axial de cette douille par où passe cet arbre. Cette course est par exemple limitée par la coopération d'au moins une bille pressée par un ressort et de gorges réceptrices ménagées dans l'arbre et/ou dans la douille et espacées l'une de l'autre de la distance de course prévue pour la douille.

Les oscillations de la fourche 9 sous l'action de l'organe de commande 10 qui assurent les mouvements longitudinaux alternés de la douille 6 par rapport au rotor qui la porte sont obtenus par basculement de cette fourche d'une position à l'autre autour d'un arbre 11 qui est orthogonalement disposé par rapport au rotor d'axe XX et qui est entraîné en rotation par l'organe de commande 10. Un montage mécanique connu permet d'obtenir les mouvements désirés sous l'action d'une came 12 qui est fixée sur l'arbre 11 et qui tourne sous l'action de ce dernier dans une ouverture de logement de forme complémentaire appropriée d'une partie formant manche de la fourche 9 et ce par rapport à une tige fixe 13 traversant une ouverture de type oeillet de ladite partie formant manche de fourche.

L'arbre 13 est porté par un berceau 14 qui fait partie des éléments fixes associés au moteur et il entraîne par un jeu de cames 15, 16 un levier 17 de traction, ici composé de deux éléments parallèles, articulé sur le berceau à une extrémité et servant de point d'ancrage d'un câble 18 à l'autre. Le câble 18 vient partiellement s'enrouler sur des poulies, telle que la poulie 19 présentée en figure 2. Chacune de ces poulies est associée à une des rangées de balais d'alimentation 20 que comporte le moteur au niveau des bagues collectrices 3 et chacune est montée rotative sur un arbre porte-balais différent 21. Les tractions exercées sur le câble 18 par l'élément de traction 17 entraînent en rotation chaque poulie 19 dans un sens ou dans l'autre suivant le sens de l'effort de traction alors exercé, cette rotation étant bien entendu très limitée angulairement, puisqu'elle est destinée à permettre ou alternativement empêcher l'établissement d'une continuité électrique entre balais 20 et bagues collectrices 3 par rapprochement ou écartement de ceux-ci.

Une tige de commande coudée 22 saille de chaque poulie 19 pour venir s'étendre au long de l'ensemble formé par les bagues collectrices 3, parallèlement à l'arbre porte-balais 21 sur lequel la poulie considérée est montée, de manière à tourner autour de cet arbre en lui restant parallèle.

Les balais 11 sont classiquement disposés par lignes parallèlement disposées par rapport à l'axe XX du rotor et régulièrement réparties autour de l'ensemble formé par les bagues collectrices 3. Chaque balai 11 est logé dans un élément porte-balai individuel 23 d'où il saille par une première extrémité pour pouvoir entrer en contact avec une bague 3 du rotor dont seul l'axe longitudinal XX est représenté en figure 2. Chaque balai 11 est par ailleurs relié par une seconde extrémité à une des couronnes d'alimentation de phase 24 conductrices et fixes qui entourent concentriquement l'ensemble formé par les bagues collectrices 3. Les éléments porte-balais 23 d'une même ligne sont portés par un même arbre porte-balais 21 par l'intermédiaire de brides individuelles 25 sur chacune desquelles est montée une pièce métallique destinée à servir de gâchette, telle la gâchette 26 de l'élément porte-balai situé à l'opposé de la poulie 19 sur l'arbre 21 en figure 2.

A cet effet chacune des gâchettes qui sont fixées sur les brides individuelles 24 d'une ligne d'éléments porte-balais 22 d'un même arbre porte-balais 21 sont disposées de manière à simultanément prendre appui sur la tige de commande 22 que comporte la poulie 19 montée sur cet arbre, lorsque celle-ci est entraîné jusqu'à une position déterminée en rotation, après que la rotation de l'arbre 11 - voir figure 1 - est entraînée la mise en court-circuit des barres 4 du rotor par la couronne de mise en court-circuit. Cet appui après une rotation limitée de la poulie 19, ici dans le sens des aiguilles d'une montre, à partir d'une position pour laquelle la tige de commande 22 n'exerce pas d'effort sur les gâchettes 26, entraîne un soulèvement des gâchettes des éléments porte-balais 23 de la ligne et en conséquence un éloignement des balais 20 correspondants par rapport aux bagues collectrices sur lesquels ces balais s'appuyaient jusqu'alors. Un tel arrangement est connu par exemple du document WO 911 505.

Il apparaît manifestement à la lecture de la description du dispositif évoqué ci-dessus que ce dispositif essentiellement mécanique est relativement complexe, qu'il est difficile à réaliser de manière standardisée et qu'il implique des réglages précis difficiles à conserver au cours du temps. Il y a en particulier des risques importants de contact aléatoires entre plaquettes de court-circuit et barres conductrices de rotor. De plus la relative complexité des moyens mécaniques mis en oeuvre et les possibilités de déréglage de ces moyens au cours du temps sont susceptibles d'entraîner des risques de mauvais fonctionnement des moteurs ainsi équipés, par exemple en raison de l'allongement du câble suivant la température atteinte et l'usure des profils des cames.

Il est donc envisagé un agencement de mise hors-circuit des moyens de démarrage par rhéostat d'un moteur asynchrone à bagues qui soit plus simple et fiable.

A cet effet, l'invention propose donc un agencement de mise hors-circuit des moyens de démarrage par rhéostat pour moteur asynchrone à bagues collectrices dont le rotor comporte un élément tubulaire électriquement isolé sur lequel sont fixées des bagues conductrices, qui sont parallèles et centrées sur l'axe d'un arbre central de ce rotor, qui sont électriquement reliées à des barres conductrices longitudinales de mise en liaison du bobinage avec chaque bague et qui sont éventuellement reliées à des barres conductrices longitudinales supplémentaires de mise en court-circuit, toutes ces barres étant spatialement réparties de manière régulière autour de l'axe de l'arbre et saillant identiquement d'un même côté hors de l'ensemble formé par les bagues pour coopérer avec un sous-ensemble de mise en court-circuit entre bagues, mobile en translation selon l'axe de l'arbre entre une première position pour laquelle ce sous-ensemble, rapproché des bagues, assure une mise en court-circuit des bagues par contact avec les barres et une seconde position pour laquelle il est éloigné des bagues et des barres.

Selon une caractéristique de l'invention, l'agencement comporte un dispositif de mise en court-circuit où, d'une part, chacune des barres a une extrémité saillante de mise en court-circuit de bague qui est munie d'un organe de contact, de type axial, et où, d'autre part, des organes de contact électriquement interconnectés, qui sont complémentaires de ceux qui terminent les barres, sont portés par une pièce de mise en court-circuit, qui positionne ces organes complémentaires de manière que les contacts s'établissent axialement et frontalement.

Selon une caractéristique de l'invention, l'agencement comporte un dispositif de mise en court-circuit où les contacts entre organes de contact et organes de contact complémentaires qui s'établissent axialement et frontalement, sont assurés par pénétration des uns dans les autres, les uns étant de type mâle et les autres de type femelle.

Selon une caractéristique de l'invention, l'agencement comporte un dispositif de mise en court-circuit ayant des organes de contact et des organes de contact complémentaires qui sont les uns de type couteau, les autres de type ressort bilame.

Selon une caractéristique de l'invention, l'agencement comporte un dispositif de mise en court-circuit ayant des organes de contact complémentaires de type femelle qui sont portés par la pièce de mise en court-circuit, les contacts mâles étant portés par les barres.

Selon une caractéristique de l'invention, l'agencement comporte un dispositif de mise en court-circuit ayant une pièce de mise en court-circuit, de type douille, coulissant longitudinalement sur une portion d'arbre du rotor sous la poussée des bras d'une fourche de commande qui viennent prendre appui par l'intermédiaire de galets fous sur l'une ou l'autre des parois en U d'une gorge périphérique que la pièce comporte, cette fourche ayant ses bras articulés chacun sur un élément de support fixe du moteur et se déplaçant entre deux positions en fonction du sens de rotation d'un arbre moteur fileté qui coopère avec une chape taraudée solidaire de la partie formant manche de la fourche.

L'invention propose aussi un agencement de mise hors-circuit des moyens de démarrage par rhéostat pour moteur asynchrone à bagues collectrices dont le rotor comporte un élément tubulaire électriquement isolé sur lequel sont fixées des bagues conductrices, qui sont parallèles et centrées sur l'axe d'un arbre central de ce rotor, ces bagues étant prévues pour être alimentées en énergie électrique par l'intermédiaire de balais conducteurs qui sont positionnés sur un ou plusieurs arbres porteurs fixes angulairement répartis de manière régulière autour de l'axe par l'intermédiaire de porte-balais individuels grâce auxquels chacun des balais est pressé contre la bordure d'une des bagues, chaque porte-balai articulé par rapport à l'arbre qui le porte étant par ailleurs doté d'une patte formant gâchette permettant de déplacer angulairement le balai qu'il porte d'une première position pour laquelle ce balai est en appui sur une bague à une seconde position pour laquelle il en est écarté, cette gâchette étant actionnée par un doigt de relevage constitué par une tige de commande parallèle à l'arbre par lequel le porte-balai considéré est porté.

Selon une caractéristique de l'invention, l'agencement comporte un dispositif de relevage de balais où chaque doigt de relevage, monté rotatif autour de l'arbre, est directement actionné par un noyau mobile d'un électro-aimant fixe, notamment lors du relevage des balais de première en seconde position.

Selon une caractéristique de l'invention, l'agencement comporte un dispositif de relevage de balais où les électro-aimants, qui agissent individuellement sur les doigts de relevage, ont un circuit d'alimentation permettant une commande simultanée de tous.

Selon une caractéristique de l'invention, l'agencement comporte un dispositif de relevage de balais doté d'électro-aimants fixes dont les noyaux respectifs sont reliés chacun par une articulation à un doigt de relevage.

Selon une caractéristique de l'invention l'agencement comporte un dispositif de relevage de balais comporte des doigts de relevage, constitués chacun par une tige portée par un bras saillant radialement d'un disque rotatif porté par l'arbre sur lequel sont positionnés les balais destinés à être relevés par l'intermédiaire de cette tige, les gâchettes de ces balais étant positionnées d'un côté de cette tige qui est à l'opposé de celui où est placée l'articulation sur laquelle agit un noyau d'électro-aimant par rapport au bras portant cette tige.

L'invention propose enfin un moteur asynchrone à bagues caractérisé en ce qu'il comporte un dispositif de mise en court-circuit et /ou un dispositif de relevage des balais ayant au moins l'une des caractéristiques évoquées ci-dessus.

L'invention, ses caractéristiques et ses avantages sont précisés dans la description qui suit en liaison avec les figures en évoquées ci-dessous.
La figure 1 présente un schéma partiel en perspective d'un rotor de moteur asynchrone à bagues équipé d'un agencement de mise hors circuit des moyens de démarrage par rhéostat et plus particulièrement du dispositif de mise en court-circuit des barres conductrices d'alimentation du rotor, tel que connu.
La figure 2 présente un schéma partiel en perspective des parties essentielles du dispositif de relevage des balais de l'agencement connu évoqué ci-dessus.
La figure 3 présente un schéma en perspective d'une extrémité de rotor de moteur asynchrone à bagues équipée d'un dispositif, selon l'invention, de mise en court-circuit des barres conductrices d'alimentation qu'il comporte.
La figure 4 présente un schéma en perspective et en coupe partielle de l'intérieur d'une extrémité de rotor équipée du dispositif de mise en court-circuit présenté en figure 3.
La figure 5 présente un schéma partiel en perspective d'une extrémité de rotor de moteur asynchrone à bagues équipée d'un dispositif, selon l'invention, de relevage des balais.

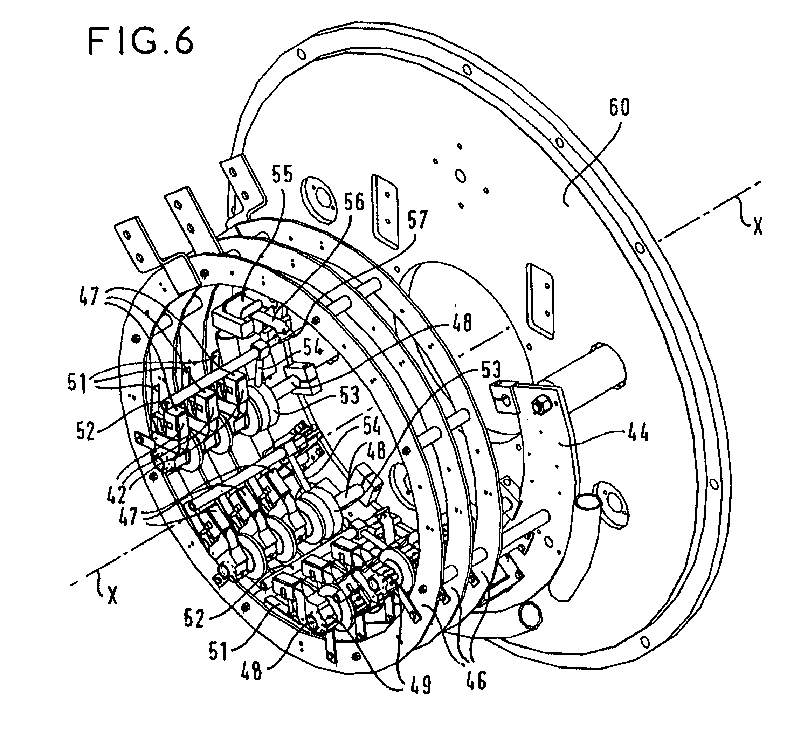

La figure 6 présente un second schéma partiel en perspective et en coupe partielle de l'intérieur d'une extrémité de moteur asynchrone à bagues équipée du dispositif de relevage de balais présenté en figure 5.

Comme indiqué plus haut, l'agencement de mise hors-circuit des moyens de démarrage par rhéostat pour moteur asynchrone à bagues qui est proposé par l'invention dissocie les moyens de mise hors-circuit précédemment combinés de manière à permettre de conserver un fonctionnement optimal du moteur au cours du temps en augmentant la fiabilité, notamment par simplification des moyens mis en oeuvre, à améliorer les performances de l'agencement par rapport aux réalisations antérieures par choix des moyens pour leur efficacité et leur simplicité et à réduire la durée et le coût des opérations de maintenance.

L'agencement selon l'invention comporte donc un dispositif de mise en court-circuit des bagues collectrices d'un moteur asynchrone à bagues et un dispositif de relevage des balais qui sont électriquement commandés successivement d'une manière correspondant à celle mise en oeuvre dans les réalisations de l'art antérieur, telle que celle évoquée plus haut tout en étant matériellement indépendants, comme le montre la suite de la description.

L'extrémité de rotor de moteur asynchrone à bagues présentée en figure 1 comporte un élément cylindrique 27 venant se loger dans un élément tubulaire 28, électriquement isolé, qui est analogue à l'élément tubulaire 1 montré en figure 1 et qui comporte une couronne 29 correspondant à la couronne 2 de ladite figure 1 à une extrémité. Cet élément tubulaire 28 porte trois bagues conductrices 30 de mise en liaison du bobinage du rotor, bobinage, non représenté, qui est situé de l'autre côté de la couronne 29 par rapport aux bagues 30 disposées en parallèle et centrées sur l'axe XX du rotor. Des barres conductrices longitudinales 31 assurent une mise en liaison sélective des différentes phases du bobinage avec les bagues 30, comme dans la réalisation antérieure présentée sur les figures 1 et 2. A cet effet ces barres 31 traversent la couronne 29 sans entrer en contact avec elle. Elles saillent d'une part de l'autre côté de la couronne 29 par rapport aux bagues 30 pour se raccorder au bobinage, par exemple de la même manière que dans la réalisation antérieure évoquée plus haut, et d'autre part au-delà de la bague 30 qui est la plus éloignée de la couronne 29.

Chacune de ces barres 31 est électriquement reliée à une bague différente par exemple par soudure, comme dans la réalisation précédente. La répartition spatiale des barres 31 autour de l'axe XX du rotor est réalisée de manière régulière pour permettre un bon équilibrage du rotor, comme nécessaire en ce domaine.

L'extrémité de chacune des barres 31 qui saillent hors de l'ensemble formé par les bagues 30, au-delà de celle de ces bagues qui est la plus éloignée de la couronne 29, est munie d'un organe de contact 32, de type axial et par exemple un contact mâle du genre couteau. Cet organe est destiné à coopérer avec un organe de contact complémentaire 33, contre lequel il vient ici presser de manière à y pénétrer, cet organe complémentaire de type femelle étant par exemple un ressort bilame. Ces organes de contact complémentaires sont ici portés par une pièce de mise en court-circuit 34 qui est ici supposée constituée par une douille conductrice centrée sur l'axe XX du rotor et mobile en translation selon cet axe.

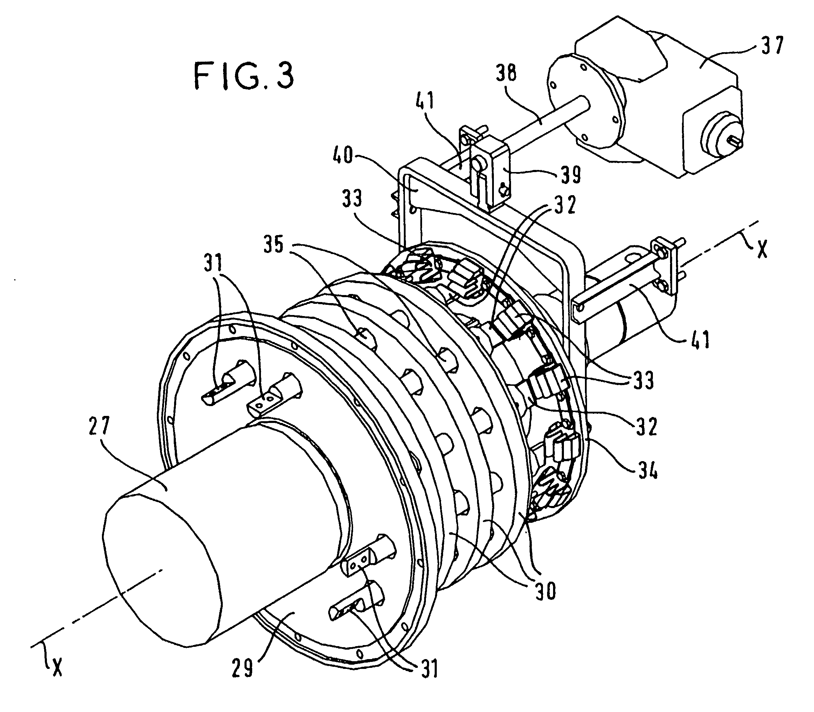

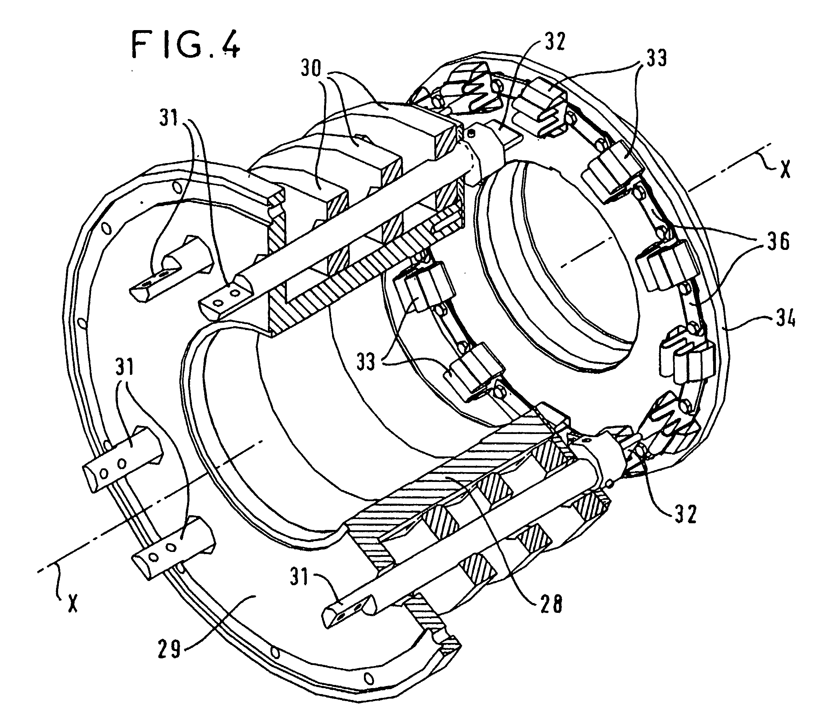

Dans la réalisation envisagée, des barres conductrices longitudinales supplémentaires 35, non représentées sur la figure 4, mais dont toutefois deux sont visibles sur la figure 3, viennent saillir au-delà de la bague 30 qui est la plus éloignée de la couronne 29, au même niveau que les barres 31, de manière à constituer des éléments de conduction électrique supplémentaires de mise en court-circuit. Dans la réalisation présentée chacune de ces barres supplémentaires 35 traverse toutes les bagues 30, mais pas la couronne 29 et vient se relier électriquement par soudure à une de ces bagues. La répartition spatiale des barres 31 et 35 autour de l'axe du rotor est réalisée de manière régulière pour permettre un bon équilibrage du rotor, comme nécessaire en ce domaine.

Les extrémités des barres supplémentaires 35 qui saillent au même niveau que celles des barres 31 au-delà de la bague 30 qui est la plus éloignée de la couronne 29 sont munies d'organes de contact 32 identiques à ceux que comportent les barres 31 de manière à coopérer avec des organes de contact complémentaires 33 montés sur la pièce de mise en court-circuit 34, le nombre et la disposition des organes de contact complémentaires 33 portés par cette pièce correspondant à ceux des organes de contact 32 portés par les barres 31 et 35.

Le déplacement de la pièce de mise en court-circuit 34 selon l'axe XX de l'arbre du rotor s'effectue entre une première position, correspondant l'une à une entrée en contact axiale de chacun des organes de contact complémentaire 33 porté par la pièce avec un des organes de contact 32 porté par une barre conductrice 31 ou 35, et une seconde position où les organes de contact supplémentaires 33 sont éloignés des organes de contact 32 d'une distance déterminée de manière connue de l'homme de métier pour ne pas permettre l'apparition ou le maintien d'une continuité électrique entre organes 32 et organes 33.

Dans la réalisation envisagée où les organes de contact sont du type couteau et où les organes de contact supplémentaires 33 sont du type bilame à fente médiane, chaque couteau vient s'enficher dans la fente médiane du bilame qui lui fait face de manière que les portions conductrices élastiques du bilame qui bordent cette fente viennent se plaquer de part et d'autre de la partie conductrice servant de lame à ce couteau. Dans une forme préférée de réalisation que l'on voit sur la figure 4, les organes de contact supplémentaires 33 qui sont réalisés en un matériau très bon conducteur sont électriquement reliés entre eux par des éléments de liaison 36 , de type barrette, portés par la pièce de mise en court-circuit 34 et eux mêmes réalisés en un matériau très bon conducteur.

Dans la réalisation envisagée la douille qui constitue la pièce de mise en court-circuit 34 coulisse sur une portion d'arbre central d'axe XX du rotor, non représentée, sous l'action d'un mécanisme de commande. Ce mécanisme est ici supposé actionné par un servomoteur 37 dont un arbre moteur 38 fileté en extrémité vient agir sur une chape 39 taraudée de manière correspondante. Cette chape tire ou pousse la partie formant manche d'une fourche de commande 40, analogue à la fourche 9, et ce suivant le sens de rotation sélectionné pour le servomoteur 37. La fourche comporte deux bras qui sont respectivement articulés chacun sur un élément de support 41 qui fait partie des éléments fixes du moteur.

L'extrémité de chacun des bras comporte un galet fou, non représenté. Les galets viennent se positionner dans une gorge périphérique leur servant de chemin de roulement sur la douille qui constitue ici la pièce de mise en court-circuit 34, selon une disposition identique à celle décrite en liaison avec la douille 6 et la fourche 9 dans la réalisation connue évoquée plus haut, cette disposition n'étant de ce fait ni répétée, ni représentée ici.

La rotation de l'arbre moteur 38 sous l'action du servomoteur entraîne donc suivant son sens, soit une poussée progressive de la fourche 40 sur la pièce de mise en court-circuit 34, selon l'axe XX et en direction des couteaux constituant les organes de contact 32, dont sont munis les barres 31 et 35, soit une traction de la fourche 40 sur cette pièce 34 pour progressivement éloigner les ressorts bilames constituant les organes de contact complémentaires 35 des couteaux.

Dans une forme de réalisation, des butées de fin de course, sont réalisées, selon un principe correspondant à celui évoqué avec la réalisation antérieure décrite plus haut, par un montage à billes soumises à l'action de ressorts qui est positionné dans la partie tubulaire interne que comporte la pièce de mise en court-circuit 34 entre cette partie et la portion d'arbre du rotor sur laquelle elle coulisse et dans lequel sont ménagées deux gorges circulaires servant à bloquer le déplacement de la pièce 24 en fin de course tant dans une direction que dans l'autre.

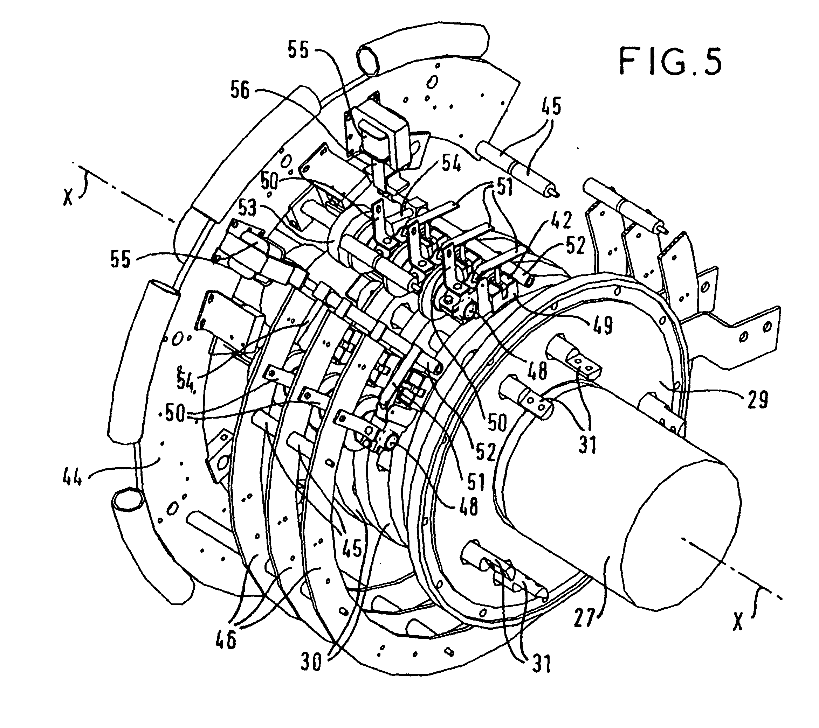

Par ailleurs, l a transmission d'énergie électrique aux bagues 30 portées par le rotor du moteur asynchrone considéré est assurée par des balais conducteurs 42 montrés en figure 5 qui viennent se plaquer contre la bordure périphérique externe des bagues et qui sont reliés chacun à une des couronnes conductrices d'alimentation 43 fixes que comporte le moteur. Comme il est connu ces couronnes 43 sont associées chacune à une bague 30 différente du rotor que pratiquement elle entoure à distance et les balais sont alignés en un ou plus généralement plusieurs rangs angulairement répartis de manière régulière autour de l'axe XX par rapport auquel ces rangs sont parallèles.

Les couronnes d'alimentation 43 sont ici supposées montées par l'intermédiaire d'entretoises isolantes 45 sur une couronne de support 44, par exemple en acier, qui est ici supposée fixée sur un disque de fond 60 qui fait partie des éléments fixes du moteur considéré.

Chaque rang comporte un nombre de balais 42 égal au nombre de bagues 30, chaque balai d'un rang étant alimenté par une couronne 46 différente qu'il partage avec d'autres balais qui comme lui viennent frotter en périphérie de la même bague.

Dans la réalisation présentée, chaque balai 42 est positionné au moyen d'un porte-balais individuel 47 par rapport à la bague contre laquelle il vient frotter. Les porte-balais 47 d'un rang de balais 42 sont ici alignés sur un même arbre porteur 48 sur lequel ils sont montés par l'intermédiaire de colliers de fixation conducteurs individuels 49, constitués chacun par exemple de deux mâchoires complémentaires boulonnées l'une à l'autre qui viennent se refermer et s'immobiliser sur l'arbre porteur 48.

Dans la réalisation envisagée, chaque collier 49 est relié par une patte conductrice 50 à une des couronnes 46, ces pattes étant dimensionnées et fixées aux couronnes de manière connue en soi pour donner des positions déterminées aux colliers sur lesquels elles sont respectivement fixées.

Chaque porte-balai 47 est articulé sur le collier qui le porte et est agencé de manière connue de l'homme de métier pour permettre au balai 42 qu'il loge de venir en appui contre le bord externe de la bague 30 contre laquelle il est prévu qu'il frotte, lors de la rotation d'axe XX de cette dernière, cet appui étant classiquement assuré par des moyens de pression par ressort(s). Une liaison électrique est établie entre chaque balai et une couronne par l'intermédiaire d'une patte conductrice 47, d'un collier 49 et d'un shunt non représenté qui est électriquement connecté au balai.

Des gâchettes 51 sont associés aux porte-balais 47, elles permettent de soulever les balais de manière que ceux-ci ne soient plus en contact avec les bagues sur lesquelles autrement ils s'appuient.

Dans la réalisation proposée, chaque gâchette 51 est associée à un porte-balai 47 différent et elle est constituée par une patte rigide, ici prévue coudée. Cette patte est fixée par une première extrémité au porte-balai auquel elle est affectée et elle comporte une zone de commande allant jusqu'à une seconde extrémité sur lequel il est prévu d'agir pour actionner la gâchette qu'elle forme.

Les gâchettes 51 relatives à des porte-balais 47 montés sur un même arbre porteur 48, qui sont préférablement identiques, ont leurs zones respectives de commande disposées de manière identique par exemple en parallèle et dans un même plan, au moins lorsque ces gâchettes ne sont pas actionnées.

Une tige, dite doigt de relevage, 52 est associé à chaque rangée de porte-balais 47 montés sur un même arbre porteur 48. Il est disposé de manière à se déplacer en restant parallèle à cet arbre, étant par exemple porté par un disque rotatif 53 disposé sur l'arbre considéré ci-dessus et par exemple monté sur roulement à aiguille. Ce doigt de relevage vient appuyer sur les gâchettes 51 associées aux porte-balais 47 montés sur ledit arbre au niveau des zones de commande de ces gâchettes, lorsqu'il passe d'une première position à une seconde position pour laquelle il repousse les porte-balais par pression sur leurs gâchettes. Dans cette dernière position, les balais 42 respectivement logés dans les porte-balais 47 montés sur un même arbre sont éloignés de la bague 30, contre laquelle ils étaient précédemment en appui, par la poussée du doigt de relevage 52 qui agit sur les gâchettes 51 de ces porte-balais.

Dans la réalisation envisagée ici, chacun des doigts de relevage 52 est perpendiculairement fixé sur un bras 54 qui saille du disque qui le porte et qui tourne autour de l'axe de l'arbre 48 portant la rangée de porte-balais 47 sur lesquels le doigt agit.

Des électro-aimants 55 sont associés aux doigts de relevage 52 dont ils assurent les mouvements. Ces électro-aimants 55 sont par exemple fixés sur la couronne de support 44 et ont chacun un noyau 56 mobile en translation sur commande électrique.

Dans la réalisation présentée, chaque noyau vient agir sur un doigt de relevage 52 auquel il est relié par une articulation 57, et permet donc de faire passer ce doigt de l'une à l'autre de ces positions.

Il est ainsi possible de relever tous les balais 42 en appui sur les bagues 46 d'un rotor de moteur synchrone, par exemple après mise en court-circuit de ces bagues, par commande électrique des électro-aimants 55. Cette commande entraîne ici une traction des noyaux 56 sur les doigts de relevage 52 des différentes rangées de balais 42 qui s'écartent alors chacun de la bague 30 contre laquelle il était jusqu'alors appuyé.

La commande électrique par électro-aimants directement sur les doigts de relevage permet d'obtenir un actionnement rapide et précis, avantageux notamment en matière d'usure des balais, qui n'était pas susceptible d'être obtenu avec la réalisation antérieure évoquée dans le préambule de la présente demande.

Le nombre des éléments constitutifs du dispositif de relevage est réduit, ce qui est favorable à la fiabilité et ces éléments sont aisément standardisables, ce qui simplifie les opérations de montage et de maintenance.

## Revendications

1. Agencement de mise hors-circuit des moyens de démarrage par rhéostat pour moteur asynchrone à bagues collectrices dont le rotor comporte un élément tubulaire (28) électriquement isolé sur lequel sont fixées des bagues conductrices (30), qui sont parallèles et centrées sur l'axe (XX) d'un arbre central de ce rotor, ces bagues (30) étant prévues pour être alimentées en énergie électrique par l'intermédiaire de balais conducteurs (42) qui sont positionnés sur un ou plusieurs arbres porteurs (48) fixes angulairement répartis de manière régulière autour de l'axe (XX) par l'intermédiaire de porte-balais individuels (47) grâce auxquels chacun des balais (42) est pressé contre la bordure d'une des bagues (30) chaque porte-balai (47) articulé par rapport à l'arbre (48) qui le porte étant par ailleurs doté d'une patte formant gâchette (51) permettant de déplacer angulairement le balai (42) qu'il porte d'une première position pour laquelle ce balai (42) est en appui sur une bague (30) à une seconde position pour laquelle il en est écarté, cette gâchette (51) étant actionnée par un doigt de relevage (52) constitué par une tige de commande parallèle à l'arbre (48) par lequel le porte-balai (47) considéré est porté, **caractérisé en ce qu'**il comporte, un dispositif de relevage de balais (42) où chaque doigt de relevage (52), monté rotatif autour de l'arbre (48), est directement actionné par un noyau (56) mobile d'un électro-aimant (55) fixe, notamment lors du relevage des balais (42) de première en seconde position.

2. Agencement, selon la revendication 1, **caractérisé en ce qu'**il comporte un dispositif de relevage de balais où les électro-aimants, qui agissent individuellement sur les doigts de relevage, ont un circuit d'alimentation permettant une commande simultanée de tous.

3. Agencement, selon l'une des revendications 1, 2, **caractérisé en ce qu'**il comporte un dispositif de relevage de balais doté d'électro-aimants fixes dont les noyaux respectifs sont reliés chacun par une articulation à un doigt de relevage.

4. Agencement, selon l'une des revendications 1, 2, 3, **caractérisé en ce qu'**il comporte un dispositif de relevage de balais doté de doigts de relevage (52), constitués chacun par une tige portée par un bras (54) saillant radialement d'un disque rotatif (53) porté par l'arbre (48) sur lequel sont positionnés les balais (42) destinés à être relevés par l'intermédiaire de cette tige, les gâchettes de ces balais étant positionnés d'un côté de cette tige qui est à l'opposé de celui où est placée l'articulation (57) sur laquelle agit un noyau (56) d'électro-aimant par rapport au bras portant cette tige.

5. Moteur asynchrone à bagues collectrices, **caractérisé en ce qu'**il comporte un agencement de mise hors-circuit des moyens de démarrage par rhéostat, selon l'une des revendications 1 à 4.

## Patentansprüche

1. Anordnung zur Abschaltung der Rheostat-Andrehvorrichtung einer Schleifring-Asynchronmaschine, deren Rotor ein elektrisch isoliertes röhrenförmiges Element (28) umfasst, an dem Schleifringe (30) befestigt sind, die parallel und auf der Achse (XX) einer zentralen Welle dieses Rotors zentriert sind, wobei diese Ringe (30) dafür vorgesehen sind, mittels leitfähigen Schleifkontakten (42) mit elektrischer Energie versorgt zu werden, die an einer oder mehreren festen Trägerwellen (48) angeordnet sind, die in gleichmäßigen Winkeln um die Achse (XX) mittels einzelner Schleifkontaktträger (47) verteilt sind, dank welcher jeder der Schleifkontakte (42) an den Rand eines der Ringe (30) gedrückt wird, wobei jeder in Bezug auf die Welle (48), die ihn trägt, gelenkig angebrachte Schleifkontaktträger (47) außerdem mit einer einen Drücker (51) bildenden Lasche versehen ist, die gestattet, den Schleifkontakt (42), den sie trägt, im Winkel von einer ersten Position, in welcher dieser Schleifkontakt (42) an einem Ring (30) anliegt, zu einer zweiten Position, in welcher er getrennt ist, zu versetzen, wobei dieser Drücker (51) durch einen Anhebezapfen (42) betätigt wird, der aus einer Steuerstange parallel zur der Welle (48), von welcher der betrachtete Schleifkontaktträger (47) getragen wird, besteht, **dadurch gekennzeichnet, dass** sie eine Anbhebevorrichtung für Schleifkontakte (42) oder jeden Anhebezapfen (52) umfasst, die drehbar um die Welle (48) angebracht ist, sie direkt von einem beweglichen Kern (56) eines festen Elektromagneten (55) betätigt wird, insbesondere bei Anhebung der Schleifkontakte (42) von der ersten in die zweite Position.

2. Anordnung nach Anspruch 1, **dadurch gekennzeichnet, dass** sie eine Anhebevorrichtung für Schleifkontakte oder die Elektnnagnete umfasst, die individuell auf die Anhebezapfen einwirken, einen Speisestromkreis aufweisen, der eine gleichzeitige Steuerung aller gestattet.

3. Anordnung nach einem der Ansprüche 1, 2, **dadurch gekennzeichnet, dass** sie eine Anhebevorrichtung für Schleifkontakte umfasst, die mit festen Elektromagneten versehen ist, deren jeweilige Kerne jeweils durch ein Gelenkt mit einem Anhebezapfen verbunden sind.

4. Anordnung nach einem der Ansprüche 1, 2, 3, **dadurch gekennzeichnet, dass** sie eine Anhebevorrichtung für Schleifkontakte umfasst, die mit Anhebezapfen (52) versehen ist, die jeweils aus einer Stange bestehen, die von einem Arm (54) getragen wird, der radial von einer drehbaren Scheibe (53) vorsteht, die von der Welle (48) getragen wird, auf der die Schleifkontakte (42) angeordnet sind, die dazu bestimmt sind, mittels dieser Stange angehoben zu werden, wobei die Drücker dieser Schleifkontakte auf einer Seite dieser Stange angeordnet sind, die in Bezug auf den Arm, der diese Stange trägt, derjenigen gegenüberliegt, auf der ein Gelenk (57) angeordnet ist, auf welches ein Elektromagnetkem (56) einwirkt.

5. Asynchronmaschine mit Schleifringen, **dadurch gekennzeichnet, dass** sie eine Anordnung zur Abschaltung der Rheostat-Andrehvorrichtung nach einem der Ansprüche 1 bis 4 umfasst.

## Claims

1. An arrangement for taking rheostat starter means for a slip-ring induction motor out of circuit, the motor having a rotor which includes an electrically insulated tubular element (28) on which there are fixed conductive slip-rings (30) which are parallel and centered on the axis (XX) of a central shaft of the rotor, said slip-rings (30) being designed to be fed with electricity via conductive brushes (42) positioned via individual brush-carriers (47) on one or more fixed carrier shafts (48) that are angularly distributed in regular manner about the axis (XX), each of the brushes (42) being pressed by its brush-carrier against the margin of one of the slip-rings (30), each brush-carrier (47) being hinged relative to the shaft (48) carrying it and also being provided with a trigger-forming tab (51) enabling the brush (42) that it carries to be moved angularly from a first position in which the brush (42) presses against a slip-ring (30) to a second position in which it is moved away therefrom, said trigger (51) being actuated by a lifting finger (52) constituted by a control rod extending parallel to the shaft (48) which carries the brush-carrier (47) in question, the arrangement being **characterized in that** it includes a brush-lifting device (42) where each lifting finger (52), rotatably mounted about the shaft (48), is directly actuated by a moving core (56) of a fixed electromagnet (55), particularly when raising the brushes (42) from the first position to the second position.

2. An arrangement according to claim 1, **characterized in that** it includes a brush-lifting device in which the electromagnets which act individually on the lifting fingers have a power supply circuit enabling all of them to be controlled simultaneously.

3. An arrangement according to claim 1 or 2, **characterized in that** it includes a brush-lifting device provided with fixed electromagnets whose respective cores are each connected via a hinge to a respective lifting finger.

4. An arrangement according to claim 1, 2, or 3, **characterized in that** it includes a brush-lifting device provided with lifting fingers (52) each constituted by a rod carried by an arm (54) projecting radially from a rotary disk (53) carried by the shaft (48) on which the brushes (42) to be lifted by said rod are positioned, the triggers of said brushes being positioned on a side of said rod opposite from its side where the hinge (57) is placed on which an electromagnet core (56) acts relative to the arm carrying the rod.

5. A slip-ring induction motor, **characterized in that** it includes an arrangement for taking the rheostat starting means out of circuit, according to any one of claims 1 to 4.
